# NEUE EUROPÄISCHE PATENTSCHRIFT

(11) **EP 2 388 095 B2**
(45) Veröffentlichungstag und Bekanntmachung des Hinweises auf die Entscheidung über den Einspruch: **18.04.2018**
(45) Hinweis auf die Patenterteilung: 03.09.2014
(21) Anmeldenummer: 11165410.9
(22) Anmeldetag: 10.05.2011
(51) Int. Cl.: B23C 5/10

(54) **Fräswerkzeug**
Milling-cutter
Outil de fraisage

(30) Priorität: 21.05.2010 DE 102010022189; 16.07.2010 DE 102010027496
(43) Veröffentlichungstag der Anmeldung: 23.11.2011
(73) Patentinhaber: Wendling, Rudolf, 93333 Neustadt an der Donau (DE)
(72) Erfinder: Wendling, Rudolf, 93342 Saal/Donau (DE)
(74) Vertreter: Hannke, Christian

(56) Entgegenhaltungen:
- EP-A1- 2 093 003
- EP-A2- 1 072 345
- DE-A1- 3 308 478
- DE-A1-102005 056 936
- DE-C1- 3 742 942
- DE-C1- 3 742 942
- DE-U1-202006 014 089
- JP-A- 6 320 323
- US-A1- 2002 090 273
- US-A1- 20020 090 273

## Beschreibung

Die vorliegende Erfindung bezieht sich auf ein Fräserwerkzeug zum spanenden Bearbeiten von Körpern gemäß dem Oberbegriff des unabhängigen Patentanspruches 1. Derartige Fräserwerkzeuge werden überwiegend auf Roboterfräszellen und auf CNC-Fräsen zum Bearbeiten von beispielsweise Nichtmetallen, wie Kunststoffen, Holz, Glasfaser, Carbon und ähnlichem verwendet.

Insbesondere bei der Bearbeitung von Kunststoffen weisen die aus dem Stand der Technik bekannten Fräserwerkzeuge den Nachteil auf, dass der maximal mögliche Vorschub, d. h. das Bewegen des Fräsers in das Werkzeug bzw. entlang des Werkstücks, nicht maximal ausgenutzt werden kann. Dies resultiert daraus, dass beim spanenden Bearbeiten des jeweiligen Körpers der Span nicht mit ausreichend hoher Geschwindigkeit aus der Frässtelle abgeführt werden kann und somit ein Verstopfen bzw. Blockieren und/oder Abstumpfen des Fräsers erfolgt, wodurch dieser beschädigt bzw. zerstört werden kann.

Bei Fräsanlagen, die eine relativ geringe Spindeldrehzahl zur Verfügung haben (ca. 20000 Umdrehungen), ergeben sich häufig sehr nachteilige Standzeiten. Normalerweise wäre z.B. bei einem 6mm Fräser eine Drehzahl von 30000 bis 35000 Umdrehungen erforderlich. Wenn man daher beim normalen Einschneider-Fräsern die Drehzahl reduziert, geht der Druck auf den Fräser in die Höhe und das Material schmilzt. Der Einsatz von Zweischneidern, d.h. Fräsern mit zwei gleich ausgebildeten Schneiden und Spanräumen, ist oft nachteilig, da derartige Fräser nicht so stabil sind, wie ein einschneidiges Werkzeug und der Spanraum bei einem zweischneidigen Werkzeug jeweils relativ klein ist.

US 2002/090273 A1 offenbart ein rotierendes Mehrschneiden-Schneidwerkzeug, welches mit zwei Schruppschneiden und mit zwei kleinen Schlichtschneiden ausgestattet ist. Dieses Mehrschneiden-Schneidwerkzeug kann insbesondere auch ein Fräswerkzeug darstellen. Hinter den Schrupp- bzw. Schlichtschneiden sind dazugehörige Schrupp- bzw. kleinere Schlichtnuten angebracht, welche sich helixförmig axial um den Schneidwerkzeuggrundkörper in Längsrichtung des Mehrschneiden-Schneidwerkzeugs winden.

Es ist daher Aufgabe der vorliegenden Erfindung, ein Fräserwerkzeug bereitzustellen, das derart ausgebildet ist, dass selbst bei hohen Vorschubgeschwindigkeiten eine ausreichend schnelle Abfuhr des Spans sichergestellt ist.

Die Lösung der zuvor gestellten Aufgabe erfolgt erfindungsgemäß durch ein Fräserwerkzeug mit den Merkmalen des Anspruchs 1.

Diese Ausführungsform ist vorteilhaft, da durch die unterschiedlich ausgebildeten Spanaufnahmebereiche zumindest ein Hauptspanabführbereich und ein Nebenspanabführbereich ausgebildet werden. Zu dem Zeitpunkt, in dem der Hauptspanabführbereich keine weiteren Materialanteile aufnimmt, da beispielsweise der daran ausgebildete Bearbeitungsabschnitt nicht mit dem zu bearbeitenden Material zusammenwirkt, ist es möglich, dass der Nebenspanabführbereich zum Abführen von Span eingesetzt wird.

Das sich der erste Spanaufnahmebereich in Umfangsrichtung um ein Vielfaches weiter erstreckt als der erste Spanaufnahmebereich ist bevorzugt auf die geometrische Gestaltung der Querschnittsfläche des Grundkörpers im Bereich der Spanaufnahmebereiche zu entnehmen. Es ist hiermit insbesondere zu verstehen, dass die zwei den ersten Spanaufnahmebereich gegenüber der Umfangsfläche des Grundkörpers begrenzenden Kanten wesentlich weiter voneinander beabstandet sind als die den zweiten Spanaufnahmebereich gegenüber der Umfangsfläche des Grundkörpers begrenzenden Kanten. Der Abstand zwischen den den jeweiligen Spanaufnahmebereich begrenzenden Kanten kann auch als Breite bezeichnet werden.

Mit dem Faktor "Vielfaches" wird ein beliebiges Vielfaches, ganzzahliges oder nicht ganzzahliges Vielfaches und damit auch ein mehr als 4-faches Vielfaches verstanden.

Diese erfindungsgemäße Lösung ist zudem vorteilhaft, da der auf den Fräser wirkende Druck beim Fräsen mit dem erfindungsgemäßen Fräser selbst bei Anlagen mit nur geringen Umdrehungszahlen, wie z.B. 20000 Umdrehungen, von der Schneidkante des Fräsers durch die zweite Schneide bzw. den zweiten Bearbeitungsabschnitt genommen wird. Somit bietet der erfindungsgemäße Fräser z.B. den Vorteil, dass die erforderliche Drehzahl aufgrund der kleinen Schneide am Rücken abgesenkt werden kann und das Trägermaterial bei einer hohen Fräsgenauigkeit nicht schmilzt.

Die zweite Schneide bzw. kleine Schneide weist eine Nutentiefe auf, die 60-70% geringer ist als die Nutentiefe der Hauptnut, sie wird bevorzugt mit einer spitzen Scheibe erzeugt und reduziert den Druck von der Schneide mit der großen Nut (bisheriger Einschneidefräser).

In einer weiteren bevorzugten Ausführungsform der vorliegenden Erfindung sind eine Vielzahl erster und/oder zweiter Spanaufnahmebereiche am Grundkörper ausgebildet. Diese Ausführungsform hat den Vorteil, dass z. B. in Abhängigkeit des jeweiligen Fräserwerkzeugdurchmessers und/oder des Einsatzbereiches bzw. Anwendungsbereiches des Fräserwerkzeugs unterschiedliche Geometrien realisierbar sind. So ist beispielsweise denkbar, dass ein erster Spanaufnahmebereich und 2, 3, 4 oder mehr zweite Spanaufnahmebereiche vorgesehen sind. Ebenfalls vorstellbar wäre, dass ein zweiter Spanaufnamebereich und 2, 3, 4 oder mehrere erste Spanaufnahmebereiche vorsehbar sind und bevorzugt entsprechend der Anzahl der ersten Spanaufnahmebereiche die gleiche Anzahl an zweiten Spanaufnahmebereichen vorsehbar ist. Somit ist ersichtlich, dass insgesamt eine beliebige Anzahl, z.B. 2, 3, 4 oder mehr Schneiden, am Fräserwerkzeug ausgebildet sein können.

Hinsichtlich der geometrischen Eigenschaften der erfindungsgemäßen Fräse ist weiterhin vorstellbar, dass die Fräserwerkzeuge rechtsschneidige und/oder linksschneidige sowie rechtsspiralige oder linksspiralige Werkzeuge sind. Ferner kann das erfindungsgemäße Fräserwerkzeug verschiedene Steigungen, beispielsweise in einem Bearbeitungsabschnitt oder zweier Bearbeitungsabschnitt aufweisen. Weiterhin ist es vorstellbar, dass der Spanwinkel und/oder der Freiwinkel je nach Einsatzgebiet oder in Abhängigkeit weiterer geometrischer Eigenschaften abhängig oder völlig unabhängig einstellbar sind. Besonders bevorzugt sind beispielsweise der Spanwinkel und der Freiwinkel des ersten und zweiten Bearbeitungsabschnitts gleich ausgebildet, wobei unterschiedlich ausgebildete Span- und Freiwinkel ebenfalls vorteilhaft sein können.

Es ist am ersten und/oder zweiten Spanaufnahmebereich die zumindest teilweise bearbeitete Kante vorgesehen bzw. ausgebildet.

Diese Kante ist vorteilhaft, da sie ein Austreten des Spans aus dem jeweiligen Spanaufnahmebereich erleichtert, da der Spanaufnahmebereich durch das Abschleifen dieser Kante partiell kleiner, d. h. bevorzugt weniger umschließend, ausgebildet ist. Dies hat den Vorteil, dass der Span einfacher abgeführt werden kann bzw. sich einfacher vom Fräserwerkzeug löst. Es kann hierbei auch von einem vergrößerten Öffnungswinkel gesprochen werden.

In einer weiteren bevorzugten Ausführungsform der vorliegenden Erfindung ist die Kante über die gesamte Länge des Bearbeitungsabschnitts, bevorzugt über zwei Drittel der Länge des Bearbeitungsabschnitts und besonders bevorzugt über die Hälfte des Bearbeitungsabschnitts zumindest teilweise abgeschliffen. Dies hat den Vorteil, dass die Bearbeitung der besagten Kante, d. h. das Abschleifen der Kante, lediglich in dem Bereich zu erfolgen hat, der tatsächlich mit dem zu bearbeitenden Körper spanend zusammenwirkt.

In einer weiteren bevorzugten Ausführungsform der vorliegenden Erfindung weist das Fräserwerkzeug im Bereich des Bearbeitungsabschnitts eine Stirnfläche auf, die zumindest abschnittsweise gegenüber einer sich rechtwinklig zur Rotationsachse erstreckenden Ebene geneigt ausgebildet ist. Diese Ausführungsform ist vorteilhaft, da die Stirnfläche beispielsweise einzelne oder mehrere Anteile einer geneigten Ebene, eine gebogene Anteile aufweisende Form und/oder mit der entsprechenden Negativ-Form derart versehen sein kann, dass eine bzw. mehrere beliebig ausgebildete Stirnschneiden vorsehbar bzw. ausbildbar oder ausgebildet sind.

In einer weiteren bevorzugten Ausführungsform der vorliegenden Erfindung sind einzelne Anteile der geneigten Stirnfläche eben oder kurvenförmig ausgebildet und erstrecken sich in Richtung oder entgegen der Längsrichtung des Grundkörpers.

In einer weiteren bevorzugten Ausführungsform der vorliegenden Erfindung weist mindestens einer der Spanaufnahmebereiche eine Kurvenform auf, die von einem Kreisbogenabschnitt verschieden ist. Diese Ausführungsform ist vorteilhaft, da der Spanaufnahmebereich so eine Geometrie aufweisen kann, die geeignet ist, um beispielsweise im Zusammenspiel mit der Fliehkraft, einen optimierten Abtransport des Spans zu ermöglichen. Es ist hierbei ebenfalls vorstellbar, dass der Spanaufnahmebereich als Kreisbogenabschnitt ausgebildet ist oder ebene Anteile aufweist.

In einer weiteren bevorzugten Ausführungsform der vorliegenden Erfindung ist das Verhältnis aus der Breite des ersten Spanaufnahmebereichs zur Tiefe des ersten Spanaufnahmebereichs größer als das Verhältnis aus der Breite des zweiten Spanaufnahmebereichs zur Tiefe des zweiten Spanaufnahmebereichs. Diese Ausführungsform ist vorteilhaft, da beispielsweise aus strukturellen Gründen und somit hinsichtlich der Stabilität, wie auch hinsichtlich des Spanabflusses, ein im Wesentlichen schlanker und ein im Wesentlichen breiter Bereich bzw. jeweils eine Vielzahl davon vorteilhaft sind.

In einer weiteren bevorzugten Ausführungsform der vorliegenden Erfindung weist der Grundkörper einen Schaftabschnitt mit einem Durchmesser auf, der größer ist als der Durchmesser des Bearbeitungsabschnitts.

Diese Ausführungsform ist vorteilhaft, da der Fräser so mit einer höheren Stabilität ausgestattet ist.

In einer weiteren bevorzugten Ausführungsform der vorliegenden Erfindung besteht der Fräser aus einem Werkstoff ausgewählt aus der Gruppe zumindest bestehend aus Schnellarbeitsstahl (ASS), Hartmetall, Cermet und/oder ähnlichem.

Diese Ausführungsform ist vorteilhaft, da je nach Größe, Anwendungsbereich, geometrischer Gestaltung und/oder ähnlichen Faktoren der jeweils optimale Werkstoff für den Fräser ausgewählt werden kann.

Vorteile und Zweckmäßigkeiten sind der nachfolgenden Beschreibung in Verbindung mit der Zeichnung zu entnehmen. Hierbei zeigen:
Fig. 1 : ein Beispiel eines Fräserwerkzeugs mit zwei Schneiden;
Fig. 2 : ein Beispiel eines Fräserwerkzeugs mit zwei Schneiden in einer Bearbeitungsphase;
Fig. 3 : ein Beispiel eines weiteren Fräserwerkzeugs;
Fig. 4 : ein Beispiel eines Fräserwerkzeugs währen einer ersten Bearbeitungsphase;
Fig. 5 : ein Beispiel eines Fräserwerkzeugs nach der ersten Bearbeitungsphase;
Fig. 6 : ein Beispiel eines Fräserwerkzeugs in einer weiteren Bearbeitungsphase;
Fig. 7 : ein Beispiel eines Fräserwerkzeugs nach der weiteren Bearbeitungsphase;
Fig. 8 : ein Beispiel eines Fräserwerkzeugs, in das ein zweiter Spanbereich eingearbeitet wird;
Fig. 9 : ein Beispiel eines Fräserwerkzeugs, dessen zweiter Spanbereich weiter bearbeitet wird;
Fig. 10 : ein Beispiel eines Fräserwerkzeugs mit einem speziell bearbeiteten Spanbereich;
Fig. 11 : ein Beispiel eines Fräserwerkzeugs in dreidimensionaler Darstellung;
Fig. 12 : ein Beispiel eines Fräserwerkzeugs in einem Beartieitungszustand; und
Fig. 13 : ein Beispiel eines weiteren Fräserwerkzeugs in dreidimensionaler Darstellung.

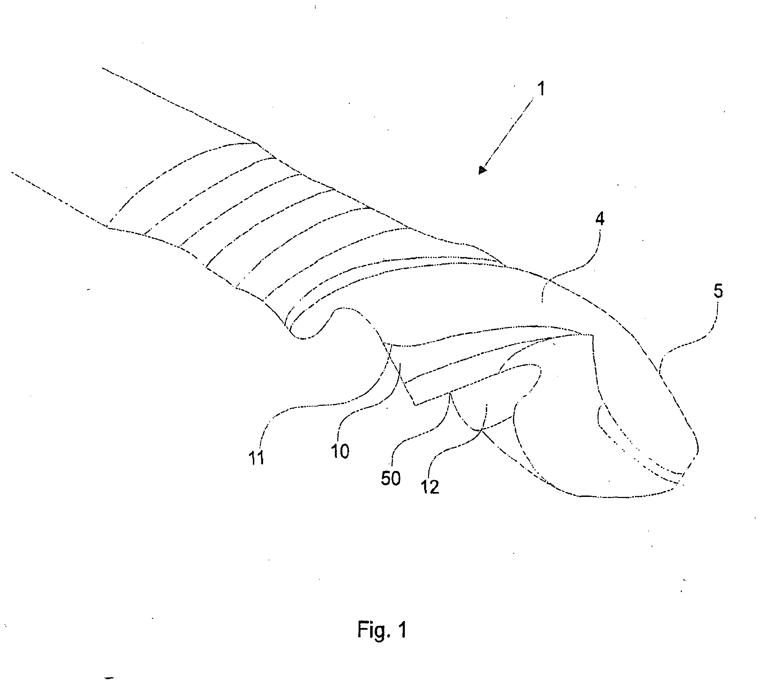

In Fig. 1 ist ein Fräser 1 dargestellt, der eine erste Schneide 5 und eine zweite Schneide 50 aufweist. Die erste Schneide 5 stellt daher bevorzugt einen ersten Bearbeitungsabschnitt dar und die zweite Schneide 50 stellt bevorzugt einen zweiten Bearbeitungsabschnitt dar. Es ist dieser Figur sehr gut zu entnehmen, dass sich ein erster Spanaufnahmebereich 4, der an die erste Schneide 5 anschließt, in Umfangsrichtung um ein Vielfaches weiter erstreckt als der zweite Spanaufnahmeraum 12, der sich an die zweite Schneide 50 anschließt. Die zweite Schneide 50 ist bevorzugt am Rücken des Fräsers 1 angeordnet, d.h. versetzt zu der am Fräser 1 ebenfalls ausgebildeten Hauptschneide 5 bzw. dem ersten Bearbeitungsabschnitt. Bevorzugt Ist die zweite Schneide 50 um 45°-315° und besonders bevorzugt um 90°-270° oder um ca. 180° bzw. genau 180° versetzt bzw. um eine Mittelachse rotiert angeordnet. Die Tiefe des an die zweite Schneide 50 anschließenden Spanaufnahmeraurns 12 ist geringer als die Tiefe des sich an die erste Schneide 5 anschließenden ersten Spanaufnahmeraums 4. Wobei auch denkbar ist, dass beide Spanaufnahmeräume 5, 50 oder alle Spanaufnahmeräume 5, 50 (sollten mehr als zwei vorgesehen sein) die gleichen oder unterschiedliche Tiefen aufweisen. Es ist somit ebenfalls denkbar, dass mehrere kleine Schneiden 50 mit geringen Nutentiefen (im Vergleich zur Nutentiefe der Hauptschneide 5) am Rücken des Fräsers 1 anbringbar sind. Der Begriff Nutentiefe beschreibt die Tiefe des jeweiligen Spanraums 5, 50. Ferner ist der Fig. 1 ebenfalls eine bearbeitete Kante zu entnehmen, die bevorzugt durch Materialabtrag erzeugt wurde und eine Vergrößerung 10 des Spanaufnahmebereichs 5 bewirkt. Der Übergang vom Spanaufnahmebereich 5 zu dem Vergrößerungsbereich 10 des Spanaufnahmebereichs 5 wird durch das Bezugszeichen 11 gekennzeichnet. Es ist jedoch ebenfalls denkbar, dass die ersten Spanaufnahmeräume 4 und/oder die zweiten Spanaufnahmeräume 12 Vergrößerungsbereiche 10 aufweisen.

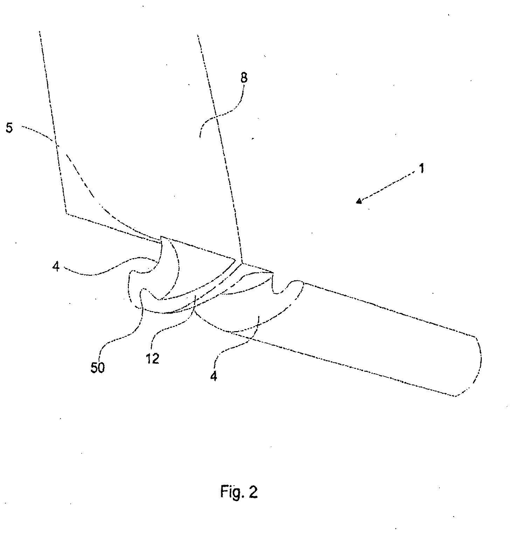

Fig. 2 zeigt eine dreidimensionale Darstellung des Fräsers 1 und eines Bearbeitungswerkzeugs 8. Der an die zweite Schneide 5 anschließende Spanaufnahmeraum 4 wird bevorzugt mit einer sehr spitzen Scheibe 8 gaschliffen, d.h. dass das zum Erzeugen des zweiten Spanaufnahmeraums 4 verwendete Bearbeitungswerkzeug 8 bevorzugt andere physikalische Eigenschaften aufweist als das zum Bearbeiten des ersten Spanaufnahmeraums 4 verwendete Bearbeitungswerkzeug 3. Wobei unter physikalischen Eigenschaften bevorzugt die Form, die Zusammensetzung und/oder ähnliches verstanden werden kann. Dies hat den Vorteil, dass die Stabilität des Fräsers 1 nicht beeinträchtigt wird. Es ist durchaus vorstellbar, dass man auch bei einem Zwei-, Drei- oder Vierschneider eine oder mehrere kleine Nuten am Rücken anbringt bzw. ausbildet, um den Druck an der Schneide 5 bzw. den Hauptschneiden zu verringern. Diese Ausgestaltung kann bei rechtsspiraligen und linkspiraligen Fräsern 1 sowie bei rechts schneidenden und links schneidenden Fräsern bzw. Werkzeugen vorgesehen sein bzw. werden.

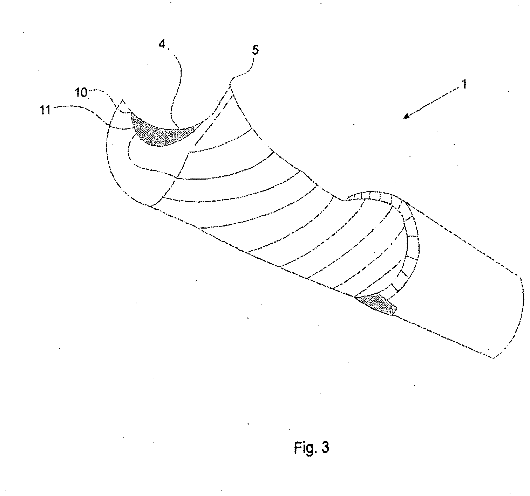

Fig. 3 zeigt einen Fräser 1 mit nur einer Schneide 5, wobei der Spanaufnahmeraum 4 durch einen Vergrößerungsbereich 10 ebenfalls modifiziert ist.

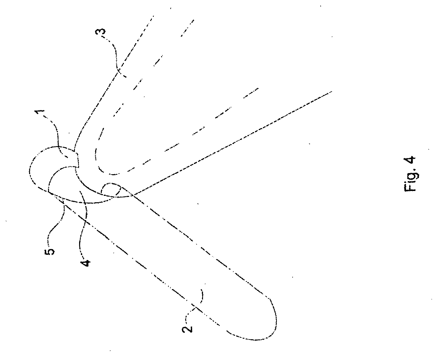

Fig. 4 zeigt ein Fräserwerkzeug 1, das zumindest teilweise durch einen zumindest teilweise bearbeiteten und besonders bevorzugt im Wesentlichen zylindrischen Grundkörper 2 ausgebildet ist und in den mittels eines Bearbeitungswerkzeugs 3, das bevorzugt ein Werkzeug zur spanenden Bearbeitung ist, ein Spanaufnahmebereich 4 in dem Grundkörper 2 bevorzugt spiralförmig ausgebildet wird. Das Bearbeitungswerkzeug 3 kann neben anderen Werkzeugen bevorzugt ein Schleifwerkzeug oder ein Fräserwerkzeug sein. Mit dem Bearbeitungswerkzeug 3 oder einem weiteren Bearbeitungswerkzeug ist in dem in Fig. 4 dargestellten Bearbeitungsschritt, in dem der Spanaufnahmebereich 4 ausgebildet wird oder in einem nachgelagerten Bearbeitungsschritt, neben dem Erzeugen des Spanaufnahmebereichs 4 bevorzugt ebenfalls die Schneide 5 des Fräserwerkzeugs 1 am Grundkörper 2, insbesondere im Bereich des Übergangs zwischen dem Spanaufnahmebereich 4 und der Grundkörperumfangsfläche, ausbildbar.

Die Schneide 5 bildet einen Winkel gegenüber der Umfangsfläche aus. Dieser Winkel kann bei mehreren Schneiden gleich oder verschieden sein.

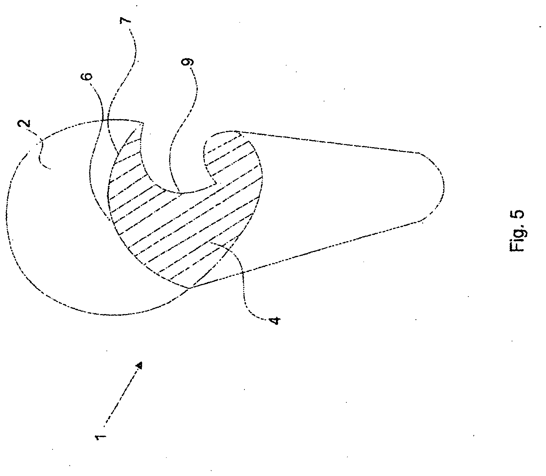

In Fig. 5 ist der Grundkörper 2 mit dem eingearbeiteten Spanaufnahmebereich 4 dargestellt. Der Spanaufnahmebereich 4 ist durch eine sphärische, bevorzugt bogenförmige und besonders bevorzugt teilkreisförmige Kurve bzw. den ersten Kurvenanteil 7 dargestellt. Durch das Bezugszeichen 6 wird das Zentrum bzw. die Rotationsachse des Grundkörpers 2 bezeichnet. Der erste Kurvenanteil 7 bzw. der Spanaufnahmebereich 4 erstreckt sich bevorzugt lediglich in einem Bereich der Querschnittsfläche des Fräserwerkzeugs 1, wobei der Bereich sich besonders bevorzugt maximal über die Hälfte der Querschnittsfläche und/oder nicht über das Zentrum 6 des Grundkörpers 2 hinweg erstreckt. Der Spanaufnahmebereich 4 wird z.B. durch die Schneide 5 und die Kante 9 begrenzt.

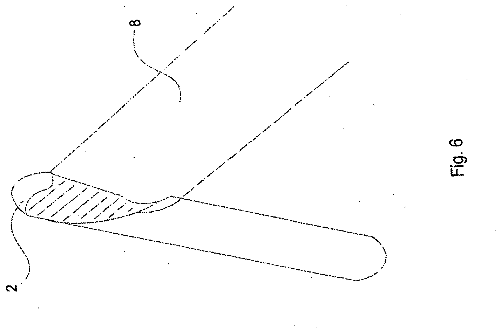

In Fig. 6 ist ein weiterer Bearbeitungsschritt dargestellt. Der Grundkörper 2 wird dabei mittels eines weiteren Werkzeugs 8 oder einem ähnlichen bzw. demselben Werkzeug, wie z.B. in Fig. 4 , bevorzugt spanend bearbeitet. Durch diesen Bearbeitungsschritt wird der Spanaufnahmebereich 4 vergrößert, wodurch eine bessere Spanabfuhr erfolgen kann. Die Vergrößerung des Spanaufnahmebereichs 4 erfolgt dabei durch Ausbilden einer bevorzugt wellenförmigen Körperkante des Fräserwerkzeugs 1. Die bevorzugt wellenförmige Körperkante lässt sich beispielsweise unterschiedlichen Querschnitten durch das Fräserwerkzeug 1 entnehmen. Ein Querschnitt erfolgt dabei bevorzugt in der Ebene rechtwinklig zu der Drehachse bzw. zum Zentrum 6 des Grundkörpers 2. Aufgrund des sich in Längsrichtung bzw. in Richtung der Drehachse spiralförmig am Grundkörper 2 erstreckenden Spanaufnahmebereichs 4 ist die wellenförmig ausgebildete Kurve in verschiedenen Querschnitten verschieden geneigt bzw. orientiert.

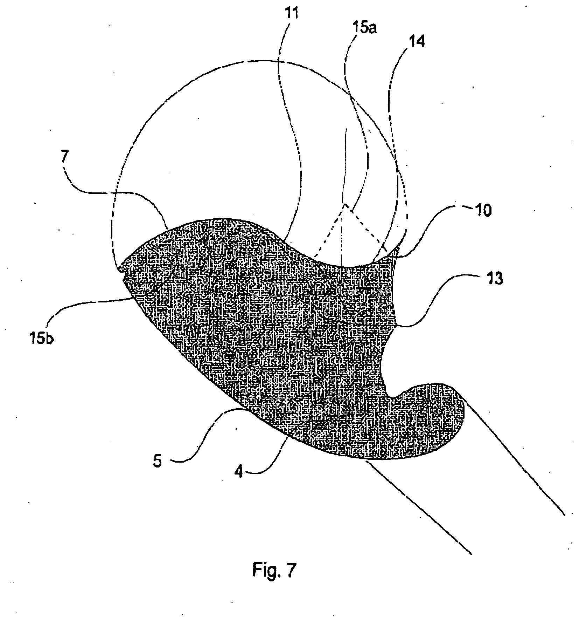

Fig. 7 ist zu entnehmen, dass die Vergrößerung 10 des Spanaufnahmebereichs 4 einem Bearbeiten bzw. Abschleifen oder Abfräsen der Kante 9 (vgl. Fig. 5) entspricht. Die dabei resultierende neue Körperkante 13 bzw. der zweite Kurvenanteil 14 weist lineare oder sphärische, bevorzugt bogenförmige oder teilkreisförmige Kurvenanteile auf. Es ist weiterhin denkbar, dass der Übergang vom ersten Kurvenanteil 7 des Spanaufnahmebereichs 4 zu dem zweiten bzw. weiteren Kurvenanteil 14 fließend oder durch einen abrupten Steigungswechsel bzw. einer abrupten Steigungsveränderung erfolgt. Fig. 7 ist eine derartige abrupte Steigungsveränderung, die mit dem Bezugszeichen 11 als Übergang bezeichnet wird, zu entnehmen. Bevorzugt weist der zweite Kurvenanteil 14 in einer Querschnittsbetrachtung den gleichen Radius oder einen größeren Radius auf als der erste Kurvenanteil 7. Besonders bevorzugt ist jedoch der Radius des zweiten Kurvenanteils 14 kleiner als der Radius des ersten Kurvenanteils 7. Wobei der Radius auch jeweils als durchschnittlicher Abstand zu einem Kurvenzentrum 15a, 15b verstanden werden kann. Der Spanaufnahmebereich 4 wird z.B. durch die Schneide 5 und den Übergang 11 oder die Kante 13, die den zweiten Kurvenanteil 14 gegenüber der Umfangsfläche 21 des Grundkörpers 2 abgrenzt, begrenzt.

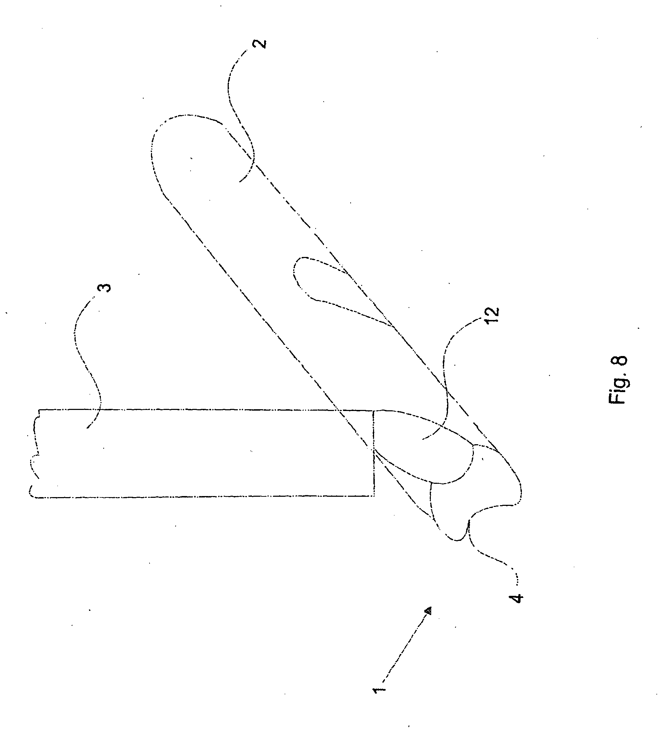

Fig. 8 offenbart eine weitere Darstellung des Grundkörpers 2, in dem mit einem Bearbeitungswerkzeug 3, 8 ein weiterer Spanaufnahmebereich 12 in den Grundkörper 2 eingearbeitet wird.

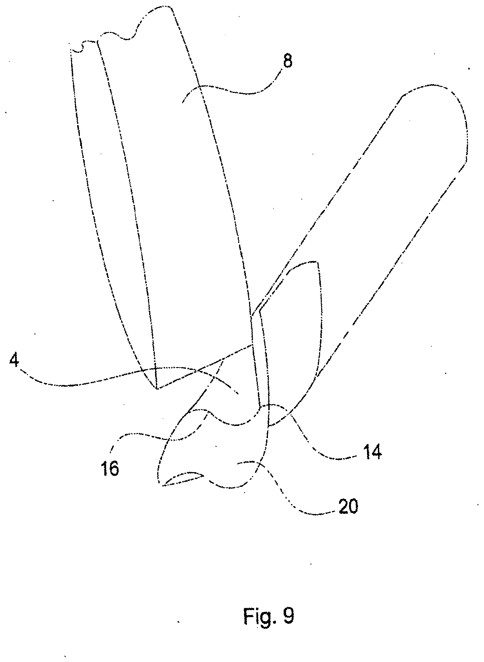

In Fig. 9 ist ebenfalls eine weitere Darstellung des Grundkörpers 2 gezeigt, in diesem Grundkörpers 2 wird mittels eines weiteren Bearbeitungswerkzeugs 8 der zweite Kurvenanteil 14 eingearbeitet. Es ist hierbei vorstellbar, dass mittels den Bearbeitungswerkzeugen 3, 8 oder weiteren Bearbeitungswerkzeugen weitere von den Kurvenanteilen 7, 14 verschiedene Kurvenanteile oder Rillen oder ähnliches stets über die gleiche Grundkörperlänge und/oder verschiedene Grundkörperlängenanteile bevorzugt in Längsrichtung der Drehachse eingearbeitet werden.

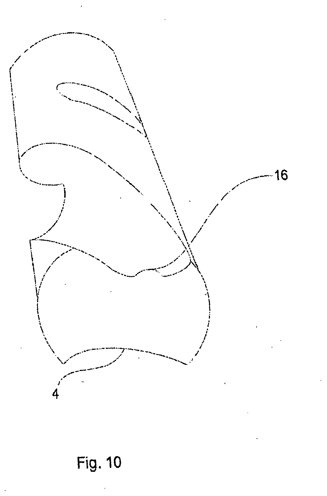

In Fig. 10 ist eine weitere perspektivische Darstellung des Fräserwerkzeugs 1 gezeigt, wobei das Fräserwerkzeug 1 in dem Spanaufnahmebereich 4 eine Erhebung 16 aufweist. Diese Erhebung 16 ist dreiecksförmig ausgebildet und erstreckt sich spiralförmig ausgehend von der Stirnseite 20, insbesondere einer Stirnfläche, zumindest teilweise und bevorzugt über ein Drittel, die Hälfte, dreiviertel oder die vollständige Länge des Spanaufnahmebereichs 4.

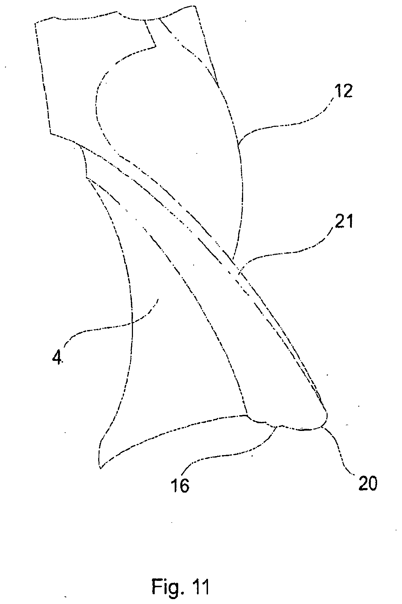

Fig. 11 ist eine perspektivische Darstellung des Fräserwerkzeugs 1 zu entnehmen, wobei das Fräserwerkzeug 1 in dieser Darstellung im Wesentlichen gleichförmig ausgebildete Spanaufnahmebereiche 4 aufweist. Es ist hierbei jedoch ebenfalls denkbar, dass die Spanaufnahmebereiche 4, 12 unterschiedliche Tiefen und unterschiedliche Radien aufweisen. Tiefe ist hierbei bevorzugt als der jeweils minimale Abstand des jeweiligen Spanaufnahmebereichs 4, 12 zu der Drehachse 6 zu verstehen.

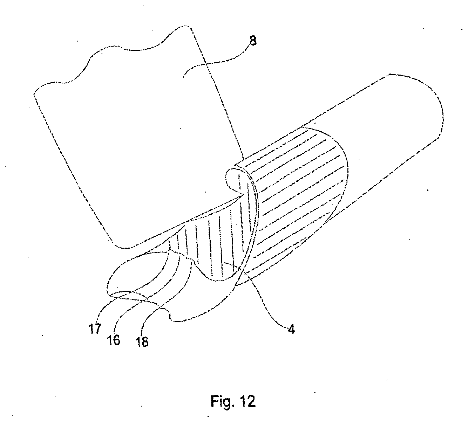

Fig. 12 offenbart ein Fräserwerkzeug 1, dessen Querschnitt Körperkanten aufweisen, die wellenartig ausgebildet sind. Es erschließt sich daraus, dass durch die Bezeichnung "wellenartig" nicht zwingend gleichförmig ausgebildete gegeneinander gerichtete Kurvenabschnitte verstanden werden müssen, sondern ebenfalls stark variierende Kurvenabschnitte, wie beispielsweise der Spanaufnahmebereich 4, die Rillen 17, 18 und die Erhebung 16 verstanden werden können. Es ist ebenfalls denkbar, dass anstelle bzw. zusätzlich zur Erhebung 16 weitere Erhebungen vorgesehen sind. Dies gilt ebenfalls für die Rillen 17, 18, wodurch anstelle der Rillen 17, 18 bzw. zusätzlich zu den Rillen 17, 18 weitere ähnliche und/oder verschieden ausgebildete Rillen vorgesehen sein können.

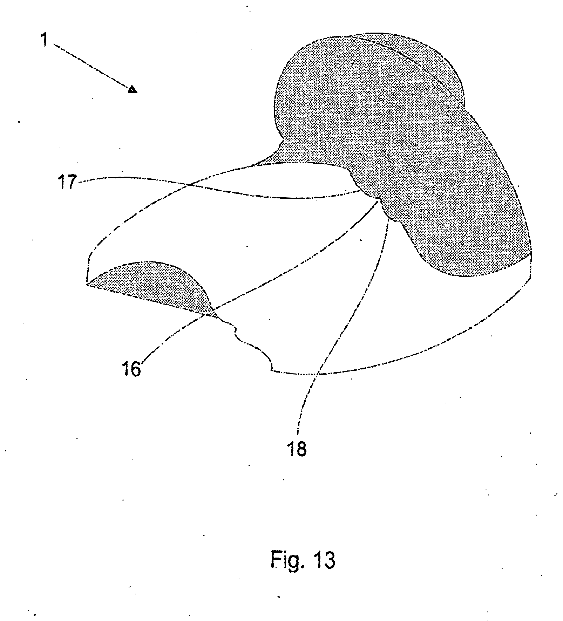

Fig. 13 ist das in Fig. 12 dargestellte Fräserwerkzeug 1 ohne das Bearbeitungswerkzeug 8 zu entnehmen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

1 : Fräserwerkzeug
2 : Grundkörper
3 : Bearbeitungswerkzeug
4 : Spanaufnahmebereich
5 : Schneide
6 : Rotationsachse
7 : erster Kurvenanteil
8 : weiteres Bearbeitungswerkzeug
9 : Kante
10 : Vergrößerung des Spanaufnahmebereichs
11 : Übergang
12 : weiterer Spanaufnahmebereich
13 : Kante
14 : zweiter Kurvenanteil
15a, 15b : Kurvenzentrum
16 : Erhebung
17, 18 : Rillen
20 : Stirnseite
21 : Umfangsfläche
50 : zweite Schneide

## Patentansprüche

1. Fräserwerkzeug (1) zum spanenden Bearbeiten von Kunststoffkörpern mit einem als Rotationskörper ausgebildeten Grundkörper (2), an dem mindestens ein erster und ein zweiter sich jeweils zumindest teilweise spiralförmig um eine Rotationsachse (6) erstreckender Bearbeitungsabschnitt (5, 50) ausgebildet ist, wobei die Bearbeitungsabschnitte (5, 50) zum Fräsen mit dem Kunststoffkörper in Kontakt bringbar sind und jeweils daran anschließende und voneinander beabstandete Spanaufnahmebereiche (4, 12) zum Abführen des abgetragenen Materials aufweisen, wobei der erste Spanaufnahmebereich (4) sich in Umfangsrichtung um ein Vielfaches, nämlich um mehr als das 4-fache, weiter erstreckt als der zweite Spanaufnahmebereich (12), um einen auf das Fräserwerkzeug (1) wirkenden Druck beim Fräsen von der Schneidkante des Fräsers durch den zweiten Bearbeitungsabschnitt (50) zu nehmen,
**dadurch gekennzeichnet, dass**
mindestens einer der Spanaufnahmebereiche (4, 12) neben dem Bearbeitungsabschnitt (5, 50) durch eine zusätzlich zumindest teilweise bearbeitete Kante (9) begrenzt ist, wobei die zusätzlich zumindest teilweise bearbeitete Kante (9) einerseits einen Vergrößerungsbereich (10) zumindest des ersten Spanaufnahmebereichs (4) sowie andererseits eine neue Körperkante (13) bildet, wobei die zwei den ersten Spanaufnahmebereich (4) gegenüber einer Umfangsfläche des Grundkörpers (2) begrenzenden Kanten weiter voneinander beabstandet sind als die den zweiten Spanöffnungsbereich (12) gegenüber der Umfangsfläche des Grundkörpers (2) begrenzenden Kanten, wobei der zweite Bearbeitungsabschnitt (50) eine Nutentiefe aufweist, welche um 60-70% geringer ist als die Nutentiefe des ersten Bearbeitungsabschnitts (5).

2. Fräserwerkzeug (1) nach Anspruch 1,
**dadurch gekennzeichnet, dass**
die Kante (9) mindestens über ein Drittel, bevorzugt die Hälfte und besonders bevorzugt zwei Drittel der Länge der Bearbeitungsabschnitte (5, 50) zumindest teilweise abgeschliffen ist.

3. Fräserwerkzeug (1) nach Anspruch 1 oder 2,
**dadurch gekennzeichnet, dass**
eine Vielzahl erster und/oder zweiter Spanaufnahmebereiche (4, 12) am Grundkörper (2) ausgebildet ist.

4. Fräserwerkzeug (1) nach mindestens einem der vorangegangenen Ansprüche,
**dadurch gekennzeichnet, dass**
das Fräserwerkzeug (1) im Bereich des Bearbeitungsabschnittes (5, 50) eine Stirnfläche (20) aufweist, die zumindest abschnittsweise gegenüber einer sich rechtwinklig zur Rotationsachse (6) erstreckenden Ebene geneigt ausgebildet ist.

5. Fräserwerkzeug (1) nach Anspruch 4,
**dadurch gekennzeichnet, dass**
einzelne Anteile der geneigten Stirnfläche (20) eben oder kurvenförmig ausgebildet sind und sich in Richtung oder entgegen der Längsrichtung des Grundkörpers (2) erstrecken.

6. Fräserwerkzeug (1) nach mindestens einem der vorangegangenen Ansprüche,
**dadurch gekennzeichnet, dass**
mindestens einer der Spanaufnahmebereiche (4, 12) eine Kurvenform aufweist, die von einem Kreisbogenabschnitt verschieden ist.

7. Fräserwerkzeug (1) nach mindestens einem der vorangegangenen Ansprüche,
**dadurch gekennzeichnet, dass**
das Verhältnis aus der Breite des ersten Spanaufnahmebereichs (4) zur Tiefe des ersten Spanaufnahmebereichs (4) größer ist als das Verhältnis aus der Breite des zweiten Spanaufnahmebereichs (12) zur Tiefe des zweiten Spanaufnahmebereichs (12).

8. Fräserwerkzeug (1) nach mindestens einem der vorangegangenen Ansprüche,
**dadurch gekennzeichnet, dass**
der Grundkörper (2) einen Schaftabschnitt mit einem größeren Durchmesser als der des Bearbeitungsabschnitts aufweist.

9. Fräserwerkzeug (1) nach mindestens einem der vorangegangenen Ansprüche,
**dadurch gekennzeichnet, dass**
der Fräserwerkstoff zumindest anteilig aus mindestens einem der Werkstoffe ausgewählt aus der Gruppe zumindest bestehend aus Schnellarbeitsstahl (HSS), Hartmetall, Cermet und/oder ähnlichem besteht.

## Claims

1. Milling cutter (1) for machining plastics bodies having a main body (2) in the form of a body of revolution, on which at least a first and a second machining portion (5, 50) each extending helically at least in part about an axis of rotation (6) are formed, the machining portions (5, 50) being able to be brought into contact with the plastics body for milling and each comprising chip-receiving regions (4, 12), which adjoin said machining portions and are at a distance from one another, for taking away the removed material, the first chip-receiving region (4) extending further in the circumferential direction than the second chip-receiving region (12) many times over, that is to say by more than four times, in order to take a pressure acting on the milling cutter (1) during milling from the cutting edge of the milling cutter through the second machining portion (50),
**characterised in that**
at least one of the chip-receiving regions (4, 12) next to the machining portion (5, 50) is delimited by an additional edge (9) which is machined at least in part, the additional edge (9) which is machined at least in part forming an enlarged region (10) of at least the first chip-receiving region (4) on one side, and a new body edge (13) on the other side, wherein the two edges which limit the first chip-receiving region (4) with respect to a circumferential surface of the main body (2) are further spaced apart than the edges which limit the second chip-receiving region (12) with respect to the circumferential surface of the main body (2), wherein the second machining portion (50) has a flute depth which is 60-70 % lower than the flute depth of the first machining portion (5).

2. Milling cutter (1) according to claim 1,
**characterised in that**
the edge (9) is abraded at least in part over at least a third, preferably half, and more preferably two thirds of the length of the machining portions (5, 50).

3. Milling cutter (1) according to either claim 1 or claim 2,
**characterised in that**
a large number of first and/or second chip-receiving regions (4, 12) are formed on the main body (2).

4. Milling cutter (1) according to at least one of the preceding claims,
**characterised in that**
the milling cutter (1) has an end face (20) in the region of the machining portion (5, 50), which face is designed to be inclined at least in some portions relative to a plane extending at a right angle to the axis of rotation (6).

5. Milling cutter (1) according to claim 4,
**characterised in that**
individual portions of the inclined end face (20) are configured to be flat or curved and extend in the direction of or counter to the longitudinal direction of the main body (2).

6. Milling cutter (1) according to at least one of the preceding claims,
**characterised in that**
at least one of the chip-receiving regions (4, 12) has a curved shape which is different from a circular arc portion.

7. Milling cutter (1) according to at least one of the preceding claims,
**characterised in that**
the ratio of the width of the first chip-receiving region (4) to the depth of the first chip-receiving region (4) is greater than the ratio of the width of the second chip-receiving region (12) to the depth of the second chip-receiving region (12).

8. Milling cutter (1) according to at least one of the preceding claims,
**characterised in that**
the main body (2) has a shank portion having a greater diameter than that of the machining portion.

9. Milling cutter (1) according to at least one of the preceding claims,
**characterised in that**
the milling material consists at least in some portions of at least one of the materials selected from the group at least consisting of high speed steel (HSS), carbide, cermet and/or the like.

## Revendications

1. Outil de fraisage (1) destiné à l'usinage par enlèvement de copeaux de corps en matière plastique, comportant un corps de base (2) réalisé sous forme de corps rotatif, sur lequel sont réalisés au moins un premier et un deuxième tronçon d'usinage (5, 50) qui s'étendent chacun au moins partiellement en forme de spirale autour d'un axe de rotation (6), lesdits tronçons d'usinage (5, 50) pouvant être amenés en contact avec le corps en matière plastique pour le processus de fraisage et comportant chacun des zones de réception de copeaux (4, 12) raccordées et écartées l'une de l'autre, destinées à évacuer la matière enlevée, la première zone de réception de copeaux (4) s'étendant dans le sens périphérique sur une plus grande longueur que la deuxième zone de réception de copeaux (12), à savoir plus de quatre fois la longueur de celle-ci, afin d'absorber une pression exercée sur l'outil de fraisage (1) pendant le fraisage par l'arête de coupe de la fraise à travers le deuxième tronçon d'usinage (50),
**caractérisé en ce qu'**
au moins une des zones de réception de copeaux (4, 12) est délimitée à côté du tronçon d'usinage (5, 50) par une arête (9) usinée, en plus, au moins partiellement, ladite arête (9) usinée, en plus, au moins partiellement formant, d'une part, une zone d'agrandissement (10) d'au moins la première zone de réception de copeaux (4), ainsi que, d'autre part, une nouvelle arête (13) du corps, les deux arêtes délimitant la première zone de réception de copeaux (4) vis-à-vis d'une surface périphérique du corps de base (2) étant plus écartées l'une de l'autre que les arêtes délimitant la deuxième zone de réception de copeaux (12) vis-à-vis de la surface périphérique du corps de base (2), le deuxième tronçon d'usinage (50) ayant une profondeur de rainure qui est inférieure de 60-70 % à la profondeur de rainure du premier tronçon d'usinage (5).

2. Outil de fraisage (1) selon la revendication 1,
**caractérisé en ce que**
l'arête (9) est affûtée au moins en partie, sur au moins un tiers, de préférence la moitié et encore mieux sur les deux tiers de la longueur des tronçons d'usinage (5, 50).

3. Outil de fraisage (1) selon la revendication 1 ou 2,
**caractérisé en ce qu'**
une pluralité de premières et/ou deuxièmes zones de réception de copeaux (4, 12) sont réalisées sur le corps de base (2).

4. Outil de fraisage (1) selon au moins l'une quelconque des revendications précédentes,
**caractérisé en ce que**
l'outil de fraisage (1) comporte, dans le tronçon d'usinage (5, 50), une face frontale (20) qui est inclinée, au moins par zones, par rapport à un plan s'étendant perpendiculairement à l'axe de rotation (6).

5. Outil de fraisage (1) selon la revendication 4,
**caractérisé en ce que**
différentes parties de la face frontale (20) inclinée sont planes ou courbes et s'étendent dans le sens ou dans le sens opposé à la direction longitudinale du corps de base (2).

6. Outil de fraisage (1) selon au moins l'une quelconque des revendications précédentes,
**caractérisé en ce qu'**
au moins une des zones de réception de copeaux (4, 12) possède une forme courbe, qui est différente d'une zone en arc de cercle.

7. Outil de fraisage (1) selon au moins l'une quelconque des revendications précédentes,
**caractérisé en ce que**
le rapport entre la largeur de la première zone de réception de copeaux (4) et la profondeur de la première zone de réception de copeaux (4) est plus grand que le rapport entre la largeur de la deuxième zone de réception de copeaux (12) et la profondeur de la deuxième zone de réception de copeaux (12).

8. Outil de fraisage (1) selon au moins l'une quelconque des revendications précédentes,
**caractérisé en ce que**
le corps de base (2) comporte une partie formant tige avec un diamètre supérieur au diamètre du tronçon d'usinage.

9. Outil de fraisage (1) selon au moins l'une quelconque des revendications précédentes,
**caractérisé en ce que**
le matériau de la fraise est choisi au moins proportionnellement parmi au moins un des matériaux du groupe constitué au moins d'un acier rapide (HSS), d'un métal dur, d'un cermet et/ou d'un matériau similaire.
